# EUROPÄISCHE PATENTSCHRIFT

(11) **EP 1 101 038 B1**
(45) Veröffentlichungstag und Bekanntmachung des Hinweises auf die Patenterteilung: **24.09.2003**
(21) Anmeldenummer: 99963148.4
(22) Anmeldetag: 09.07.1999
(51) Int. Cl.: F15B 11/028, E02F 9/12

(54) **HYDRAULISCHE SCHALTUNG**
HYDRAULIC CIRCUIT
CIRCUIT HYDRAULIQUE

(30) Priorität: 24.07.1998 DE 19833489
(43) Veröffentlichungstag der Anmeldung: 23.05.2001
(73) Patentinhaber: Bosch Rexroth AG, 97816 Lohr am Main (DE)
(72) Erfinder: WEICKERT, Thomas, D-97783 Karsbach (DE); ADLON, Erich, D-97859 Wiesthal (DE)
(74) Vertreter: Winter, Brandl, Fürniss, Hübner, Röss, Kaiser, Polte, Partnerschaft
(86) Internationale Anmeldenummer: DE9902131
(87) Internationale Veröffentlichungsnummer: WO00006915

(56) Entgegenhaltungen:
- EP-A- 0 672 797
- WO-A-95/07231
- DE-A- 4 425 455
- DE-A- 19 524 900
- DE-A- 19 744 337

## Beschreibung

Die Erfindung betrifft eine hydraulische Schaltung zur Ansteuerung eines Verbrauchers gemäß dem Oberbegriff des Patentanspruchs 1 und ein Verfahren zur Ansteuerung eines Hydromotors, bei dem eine derartige Schaltung verwendet wird.

Derartige Schaltungen werden bei Arbeitsgeräten eingesetzt, bei denen eine positive oder negative Beschleunigung eines Geräteaufbaus in Abhängigkeit von einem Druck am Verbraucher realisiert werden soll. Eine typische Anwendung liegt beispielsweise bei einem Drehwerk eines Mobilbaggers vor, dessen Oberwagen über ein Drehwerk bewegt wird. Das Drehwerk wird mittels eines Hydromotors angetrieben, der von einer Pumpe über ein Wegeventil mit Druckmittel versorgt wird.

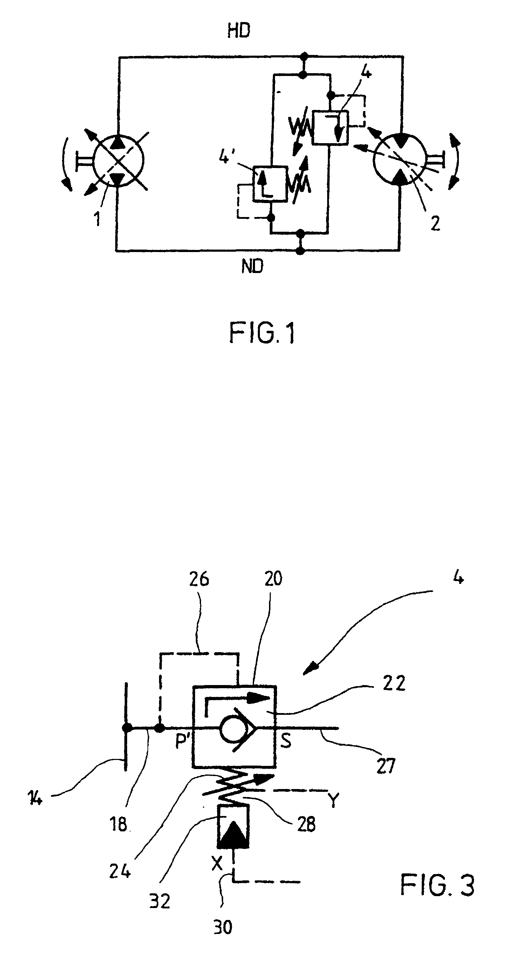

In Figur 1, auf die bereits jetzt Bezug genommen sei, ist in stark vereinfachter Weise ein Schaltplan für einen derartigen Drehwerksantrieb dargestellt. Gezeigt ist ein geschlossener Kreislauf, das gleiche Prinzip läßt sich selbstverständlich auch bei offenen Kreisläufen anwenden.

Der geschlossene Kreislauf hat eine Hydropumpe 1, die als Verstellpumpe ausgeführt ist und über die ein Hydromotor 2 des Drehwerks angetrieben ist. Die Absicherung des Drehwerkantriebes erfolgt über Druckbegrenzungsventile 4, 4', die bei Überschreiten eines vorgegebenen Systemdrucks in der Zulaufseite (Hochdruckseite HD) zur Ablaufseite (Niederdruckseite ND) hin öffnen. Dabei wird das Druckmittel am Hydromotor 2 vorbei vom Zulauf direkt in den Ablauf geführt, so daß Druckspitzen im Hochdruckzweig vermieden werden können. Bei Umkehrung der Förderrichtung der Hydropumpe 1 werden der HD- und der ND-Zweig vertauscht, so daß zur Absicherung dieses Zustandes das parallelgeschaltete Druckbegrenzungsventil 4, 4' Wirkung entfaltet.

Bei Ansteuerung des Hydromotors 1 steigt der Lastdruck relativ stark an, da der stehende Oberwagen zunächst beschleunigt werden muß. Nach der Beschleunigungsphase, das heißt nach Überwinden des Anfahrwiderstandes läßt sich der Oberwagen mit vergleichsweise geringer Kraft weiterdrehen, so daß der Lastdruck auf ein niedrigeres Niveau abfällt. Beim Abbremsen des Oberwagens kann entsprechend ein hoher Druck auf der Ablaufseite des Hydromotors auftreten. Die EP 0 603 421 A1 offenbart einen offenen Kreislauf, bei dem festeingestellte Druckbegrenzungsventile verwendet werden, um die verschiedenen Drükke auf einen Maximalwert zu begrenzen. Die Druckbegrenzungsventile können auch verstellbar ausgeführt werden, so daß durch die Kraft einer Schließfeder des Druckbegrenzungsventils ein unterer Einstellwert vorgegeben ist. Dieser läßt sich verändern, indem zusätzlich zur Kraft der Schließfeder ein Steuerdruck in Schließrichtung wirkt, so daß ein oberer Einstellwert definierbar ist. Eine derartige Lösung ist in der US 5,460,000 offenbart.

In der EP 0 053 323 A1 ist eine gattungsgemäße Schaltung offenbart, bei der ein Steuerdruck in Öffnungsrichtung des Druckbegrenzungsventils wirkt, so daß die Einstellung des ablaufseitigen Druckbegrenzungsventils beispielsweise auf einen niedrigeren, unteren Einstellwert absenkbar ist.

In der nachveröffentlichten Patentanmeldung 19744337 der Anmelderin ist ein Druckbegrenzungsventil offenbart, bei dem die Schließfeder eines Vorsteuer-Ventilkörpers an einem Übersetzerkolben abgestützt ist, der seinerseits zur Veränderung der Federvorspannung mit dem Druck im Federraum der Hauptstufe des Druckbegrenzungsventils beaufschlagbar ist.

Die DE 195 24 900 A der Anmelderin offenbart ein vorgesteuertes Druckbegrenzungsventil mit einem Hauptventil, über das die Verbindung zwischen einem Hochdruckanschluß und einem Niederdruckanschluß aufsteuerbar ist, und mit einer Nachsaugeinrichtung zum Einspeisen von Hydraulikfluid vom Niederdruckanschluß zum Hochdruckanschluß, wobei zur Bereitstellung eines größeren Strömungsquerschnitts beim Einspeisemodus und somit zur Verbesserung des Ansprechverhaltens des Druckbegrenzungsventils Hydraulikfluid über eine aufsteuerbare Entlastungsleitung aus dem Federraum des Hauptventils austreten kann.

Die EP-A-0 672 797 zeigt einen Hydraulikkreislauf zur Verwendung in einem Arbeitsgerät, beispielsweise ein Kran, mit einem durch einen Hebel fernbetätigten Steuerventil zur Steuerung eines Steuerdrucks, einem Wegeventil, das mit beiden Durchflußleitungen verbunden ist, einem Hydromotor zur Drehung, zu dem die Durchflußmenge des Hydrauliköls aus einem Tank durch das Wegeventil gesteuert wird, und mit Sicherheitsventilen, die an beiden Durchf lußleitungen des Hydromotors zur Drehung angeordnet sind, wobei eine Einstelldrucksteuerungeinrichtung zur Veränderung des Einstelldrucks beider Sicherheitsventile in Übereinstimmung mit einem Betriebszustand des Verbrauchers dieses Arbeitsgeräts vorgesehen ist.

Beim praktischen Einsatz der vorbeschriebenen Schaltungsvarianten zeigt es sich, daß es beim Abbremsen eines Drehwerks, insbesondere bei niedrig oder unbeladener Arbeitsausrüstung zu einem abrupten Abstoppen des Oberwagens kommen kann. Diese schlagartigen Belastungen können zu einer Beschädigung des Drehwerks oder der Arbeitsausrüstung führen.

Demgegenüber liegt der Erfindung die Aufgabe zugrunde, eine hydraulische Schaltung zur Ansteuerung eines Verbrauchers und ein Verfahren zur Ansteuerung eines mit einer derartigen Schaltung versehenen Hydromotors zu schaffen, bei denen die Betriebssicherheit des Arbeitsgeräts mit minimalem vorrichtungstechnischen Aufwand verbessert ist.

Diese Aufgabe wird hinsichtlich der hydraulischen Schaltung durch die Merkmale des Patentanspruchs 1 und hinsichtlich des Verfahrens zur Ansteuerung eines Hydromotors durch die Merkmale des nebengeordneten Patentanspruchs 10 gelöst.

Durch die Maßnahme, das vorgesteuerte Druckbegrenzungsventil in der Ablauf- beziehungsweise Zulaufleitung in Abhängigkeit von einem Vorsteuerlastdruck anzusteuern, der die Belastung, beispielsweise das Massenträgheitsmoment des Arbeitsgerätes wiedergibt, kann der über das Druckbegrenzungsventil gesteuerte Bremsdruck in Abhängigkeit von dieser Belastung gewählt werden.

Das heißt, bei niedriger Belastung des Arbeitsgeräts wird ein entsprechend niedriger Bremsdruck eingestellt, so daß das Arbeitsgerät mit vergleichsweise geringer Bremskraft verzögert wird. Bei hohen Lasten wird ein entsprechend höherer Druck in der Ablaufleitung eingestellt, so daß die Bremsleistung stets in optimaler Weise an die Betriebsbedingungen angepaßt ist.

Bei mobilen Arbeitsgeräten mit Drehwerksantrieb bietet es sich an, die Ansteuerung der Druckbegrenzungsventile in Abhängigkeit vom Massenträgheitsmoment des Oberwagens zu wählen. Der dem Massenträgheitsmoment entsprechende vorsteuerlastdruck läßt sich beispielsweise an den zwischen dem Oberwagen und dem Ausleger befindlichen Hubzylindern abgreifen, so daß ein vergleichsweise geringer schaltungstechnischer Aufwand zur Realisierung der erfindungsgemäßen Schaltung erforderlich ist.

Dieser beispielsweise dem Trägheitsmoment des Oberwagens entsprechende Lastdruck wird direkt an einen Vorsteuerventilkörper des Druckbegrenzungsventils oder an einen Übersetzerkolben gemeldet, so daß die auf den Vorsteuerventilkörper wirkende Schließkraft in Abhängigkeit von der Belastung des Arbeitsgerätes einstellbar ist. Der minimale vorsteuerlastdruck ist dabei durch die Kraft der Schließfeder vorgegeben, während der maximale Vorsteuerlastdruck durch die Kraft der Schließfeder und den abgegriffenen Lastdruck bestimmt wird.

Prinzipiell ist es auch vorstellbar, die Ansteuerung des Druckbegrenzungsventils elektrisch durchzuführen, und dabei das Druckbegrenzungsventil in Abhängigkeit von dem Lastdruck (Trägheitsmoment) elektrisch anzusteuern.

Die hydraulische Schaltung wird vorzugsweise mit einem Wechselventil ausgeführt, an dessen Ausgang die Vorsteuerleitung angeschlossen ist, und an dessen Eingänge der Lastdruck des erstgenannten Verbrauchers des Arbeitsgerätes und der der Belastung des Arbeitsgerätes entsprechende Lastdruck eines anderen Verbrauchers gemeldet sind.

Bei einer bevorzugten Variante der hydraulischen Schaltung wirkt der Vorsteuerlastdruck auf einen Übersetzerkolben, an dem die Schließfeder für den Vorsteuerventilkörper abgestützt ist.

Alternativ dazu kann der Vorsteuerventilkörper auch direkt mit dem Vorsteuerlastdruck beaufschlagt werden.

Besonders vorteilhaft ist es, wenn die Druckbegrenzungsventile als Drucknachsaugventile ausgeführt sind.

Das Verhältnis des Durchmessers des Übersetzerkolbens und des Ventilsitzes des Vorsteuerventilkörpers beträgt vorzugsweise 1,1 : 1.

Sonstige vorteilhafte Ausgestaltungen der Erfindung sind Gegenstand der weiteren Unteransprüche. Im folgenden wird ein bevorzugtes Ausführungsbeispiel der Erfindung anhand schematischer Zeichnungen näher erläutert. Es zeigen:
Figur 1 einen vereinfachten Schaltplan eines bekannten Drehwerkantriebes;
Figur 2 ein Schaltschema einer hydraulischen Schaltung zur Ansteuerung eines Bagger-Drehwerks;
Figur 3 ein Schaltsymbol eines Druckbegrenzungsventils der Schaltung aus Figur 2 ;
Figur 4 einen Schnitt durch ein Druckbegrenzungsventil für eine Schaltung gemäß Figur 2 und
Figur 5 ein Diagramm zur Erläuterung des Bremsdruck-Verlaufs in Abhängigkeit von der Zeit für verschiedene Trägheitsmomente eines Drehwerks.

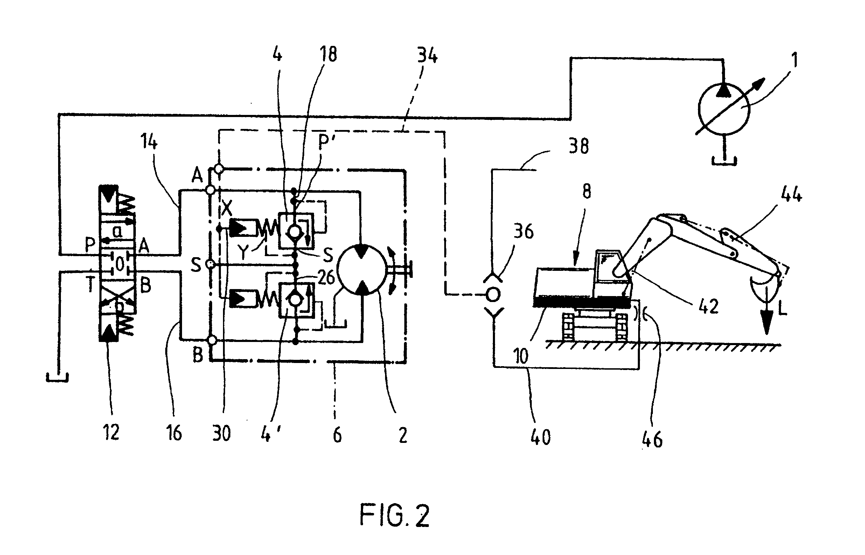

Figur 2 zeigt ein stark vereinfachtes Schaltschema, in dem eine erfindungsgemäße Schaltung 6 zur Ansteuerung eines mobilen Arbeitsgerätes, beispielsweise des Drehwerks 10 eines Baggers 8 verwendet wird. Selbstverständlich ist die Schaltung 6 auch bei anderen Arbeitsgeräten, beispielsweise bei ümschlaggeräten, Tele-Baggern und sonstigen Arbeitsgerätschaften anwendbar, bei denen die eingangs beschriebenen Beschleunigungs- und Verzögerungszustände auftreten können.

Der Einfachheit halber werden im folgenden für einander entsprechende Bauelemente die gleichen Bezugszeichen verwendet, wie sie bereits im Zusammenhang mit der Beschreibung der Figur 1 zugeordnet sind.

Der Antrieb des Drehwerks 10 erfolgt mittels eines Hydromotors 2, der über eine als Verstellpumpe ausgeführte Hydropumpe 1 mit Druckmittel versorgt wird. Bei dem in Figur 2 dargestellten Ausführungsbeispiel ist die Anlage als offener Kreislauf ausgeführt, wobei das Druckmittel von der Verstelipumpe 1 aus einem Tank angesaugt und vom Hydromotor 2 zum Tank zurückgeführt wird.

Der Hydromotor 2 ist mit 2 Strömungsrichtungen ausgeführt, wobei die Ansteuerung über ein Richtungsventil 12 erfolgt, über das das Druckmittel wahlweise an einem Anschluß des Hydromotors 2 angelegt und vom jeweils anderen Anschluß zum Tank T zurückgeführt wird.

Beim gezeigten Ausführungsbeispiel ist das Richtungsventil 12 als 4/3-Wegeventil, mit einem Pumpenanschluß P, einem Tankanschluß T und zwei Arbeitsanschlüssen A, B ausgeführt. In der federvorgespannten Grundposition sind diese vier Anschlüsse abgesperrt. Je nach Ansteuerung des Ventilschiebers des Richtungsventils 12 läßt sich dann der Pumpenanschluß P mit einem Arbeitsanschluß A, B verbinden, während der jeweils andere Arbeitsanschluß mit dem Tankanschluß verbunden ist.

Von den beiden Arbeitsanschlüssen A, B führen Arbeitsleitungen 14, 16 zu den Anschlüssen des Hydromotors 2. Zur Absicherung des Druckes in den Arbeitsleitungen 14, 16 sind zwei als Nachsaugventile ausgeführte Druckbegrenzungsventile 4, 4' vorgesehen, über die Druckmittel aus einer Arbeitsleitung abführbar ist. Auf diese Weise kann ein übermäßiger Druckaufbau in den Arbeitsleitungen und somit eine Beschädigung des Drehwerkantriebes verhindert werden.

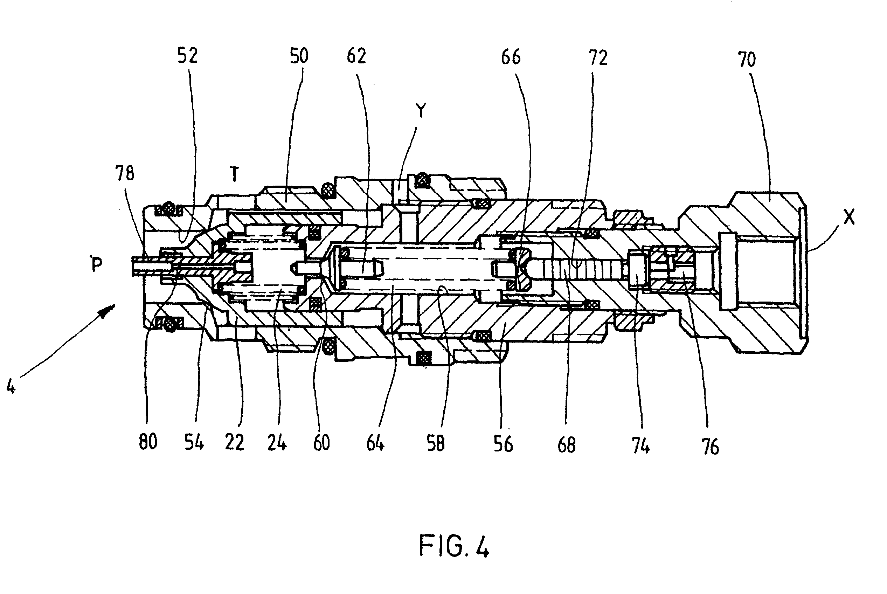

Figur 3 zeigt das Schaltsymbol des Druckbegrenzungsventils 4 in vergrößerter Darstellung. Demgemäß zweigt von der Arbeitsleitung 14 eine Druckleitung 18 ab, die zum Eingangsanschluß P' einer Hauptstufe 20 des Druckbegrenzungsventils 4 geführt ist. Ein Hauptkolben 22 der Hauptstufe 20 ist durch eine Druckfeder 24 in seine Schließstellung vorgespannt. Der Druck am Eingangsanschluß P' der Hauptstufe 20 wird über eine Steuerleitung 26 an die in Öffnungsrichtung wirkende Stirnseite des Hauptkolbens 22 gemeldet, so daß bei Überschreiten eines vorbestimmten Druckes in der Arbeitsleitung 14 der Eingangsanschluß P' mit dem Niederdruck- oder Tankanschluß S verbunden ist. Zur Ermöglichung der Nachsaugfunktion ist die Hauptstufe 20 derart ausgebildet, daß eine Durchströmung in Gegenrichtung, das heißt vom Anschluß S zum Anschluß P' möglich ist. An den Tankanschluß S ist eine Verbindungsleitung 27 angeschlossen, über die das Druckmittel mit dem Niederdruckbereich verbunden ist.

Der Einstellwert der Hauptstufe 20, das heißt derjenige Maximaldruck, auf den der Druck in der Arbeitsleitung 14 begrenzt wird, läßt sich über eine Vorsteuerstufe 28 einstellen, über die diejenige Kraft variierbar ist, die auf den Hauptkolben 22 in Schließrichtung wirkt. Selbstverständlich ist das Grundprinzip auch auf derartige Vorsteuerstufen anwendbar, bei denen der in Öffnungsrichtung wirkende Druck variierbar ist, so daß der maximal einstellbare Druck durch die Kraft der Druckfeder 24 bestimmt ist.

Bei dem in Figur 3 dargestellten Ausführungsbeispiel wird der auf den Hauptkolben 22 in Schließrichtung wirkende Druck über einen im folgenden beschriebenen Vorsteuerventilkörper gesteuert, der über eine Vorsteuerfeder gegen ein Vorsteuerventilsitz vorgespannt ist. Diese Vorsteuerfeder ist an einem Übersetzerkolben 32 abgestützt. An die Rückseite dieses Übersetzerkolbens 32 wird über einen Vorsteueranschluß X und eine Vorsteuerleitung 30 ein externer Steuerdruck gemeldet, so daß die Vorspannung der Vorsteuerfeder einstellbar ist. Der Federraum der Vorsteuerfeder ist über einen Steueranschluß Y mit dem Niederdruckbereich, beispielweise dem Tank verbunden, so daß bei Öffnen des Vorsteuerventilkörpers Druckmittel vom Federraum der Hauptstufe abströmen kann.

Bei einer derartigen Konstruktion ist der untere Einstellwert des Druckbegrenzungsventils im wesentlichen durch die Kraft der Vorsteuerfeder vorgegeben, über die der Vorsteuerventilkörper gegen den Vorsteuerventilsitz gedrückt wird. Durch Melden des externen Steuerdruckes an den Vorsteueranschluß X lassen sich die in Schließrichtung wirkenden Kräfte erhöhen, so daß der maximal einstellbare Druck durch die Kraft der Vorsteuerfeder und den an den Vorsteueranschluß X gemeldeten Steuerdruck bestimmt ist.

Gemäß Figur 2 sind die beiden identisch aufgebauten Druckbegrenzungsventile 4, 4' parallel zum Hydromotor 2 geschaltet, wobei die Anschlüsse S der Druckbegrenzungsventile 4, 4' über die Verbindungsleitung 26 miteinander verbunden sind, während der Eingangsanschluß P' über die Druckleitung 18 mit den Arbeitsleitungen 14 beziehungsweise 16 verbunden sind.

Die beiden Vorsteueranschlüsse X sind über die Vorsteuerleitung 30 zu einer gemeinsamen Bremsdruckmeldeleitung 34 geführt, die an den Ausgangsanschluß eines Wechselventils 36 angeschlossen ist.

An einen Eingangsanschluß des Wechselventils 36 wird über eine Leitung 38 der Lastdruck des Drehwerks gemeldet, der auch zur Ansteuerung der Verstellpumpe 1 verwendet werden kann. Der andere Eingangsanschluß des Wechselventils 36 ist über eine Belastungsmeldeleitung 40 mit dem Zylinderraum eines Hubzylinders 42 zur Betätigung eines Auslegers 44 des Baggers 8 verbunden. Das heißt, durch die Belastungsmeldeleitung 40 wird der der Auslegerposition entsprechende Druck im Hubzylinder 42 an den Eingangsanschluß des Wechselventils 36 gemeldet. Dieser der Belastung des Baggers entsprechende Steuerdruck variiert bei gleichbleibender Last L mit der Position des Auslegers. Das heißt, bei eingefahrenem Ausleger 44 (Last L konstant) ist das Massenträgheitsmoment des Drehwerks vergleichsweise gering, so daß bei einer Verstellung des Drehwerkes vergleichsweise geringe Kräfte aufzuwenden sind, während bei ausgefahrenem Ausleger das Massenträgheitsmoment wesentlich größer ist, so daß größere Kräfte zur Beschleunigung oder Verzögerung des Drehwerkes erforderlich sind. An Stelle des Druckes im Hubzylinder lassen sich in der Praxis auch andere Signaldrücke verwenden, um den Belastungszustand des Arbeitsgerätes wiederzugeben. So könnte man beispielsweise einen von der Last L abhängigen Lastdruck, einen von der Bodenauflagekraft des Arbeitsgerätes abhängigen Lastdruck etc. zur Ansteuerung der Druckbegrenzungsventile 4, 4' verwenden.

Der Druck in der Belastungsmeldeleitung 40 kann über ein Druckbegrenzungsventil auf einen Grenzwert beschränkt werde, so daß beispielsweise beim Fahren des Auslegers 44 gegen einen Anschlag kein übermäßiger Druckaufbau in den Arbeitsleitungen 14, 16 erfolgen kann. Um den Einfluß von Druckschwankungen zu verringern, ist in der Belastungsmeldeleitung 40 eine Drossel 46 vorgesehen.

Zum Drehen des Drehwerks 10 in eine Richtung wird das Richtungsventil 12 aus seiner mit 0 gekennzeichneten Grundposition durch Anlegen eines Steuerdrucks in eine Schaltstellung (beispielsweise a) gebracht. In dieser Schaltstellung ist der Pumpenanschluß P über den Arbeitsanschluß A mit der Arbeitsleitung 14 verbunden, so daß das Druckmittel zu einem Eingangsanschluß des Hydromotors 2 und von dort über die Arbeitsleitung 16, den Arbeitsanschluß B zum Tankanschluß T zurückgeführt wird. Wie bereits eingangs erwähnt wurde, baut sich bei der anfänglichen Beschleunigung des Drehwerks 10 zunächst ein hoher Lastdruck am Drehwerk auf, der über die Leitung 38 zur Vorsteuerstufe 28 des Druckbegrenzungsventils 4 gemeldet wird. Aufgrund dieses sehr hohen Lastdruckes wird der Vorsteuerventilkörper mit hoher Kraft gegen seinen Ventilsitz gedrückt, so daß das Druckbegrenzungsventil 4 auf einen Einstellwert eingestellt ist, der in der Regel oberhalb der LS-Druckabschneidung liegt, mit der der maximale Zulaufdruck zum Hydromotor beschränkt ist, so daß dieser Einstellwert der Druckbegrenzungsventile 4, 4' unkritisch ist. Hinsichtlich der Funktion der LS-Druckabschneidung wird der Einfachheit halber auf den vorhandenen Stand der Technik, beispielsweise die DE 4220656A1 verwiesen.

Durch die Auslegung dieses höheren Einstellwertes auf einen Druck oberhalb der LS-Druckabschneidung läßt sich die beim Beschleunigen auftretende Verlustleistung auf ein Minimum reduzieren.

Wichtiger für die Funktion des Drehwerkes ist der Einstellwert der Druckbegrenzungsventile 4, 4' , der sich beim Abbremsen des Drehwerkes einstellt. Zum Abbremsen des Drehwerkes wird das Richtungsventil 12 aus der Schaltstellung a zurück in die Schaltstellung 0 gebracht, so daß die Anschlüsse P, T, A und B gegeneinander abgesperrt sind. Aufgrund seiner Massenträgheit dreht das Drehwerk 10 trotz Unterbrechung der Druckmittelzufuhr weiter, so daß sich in der Arbeitsleitung 16 ein der Drehung entgegenwirkender Bremsdruck aufbaut. Dieser Bremsdruck kann bei geringer Belastung des Baggers 8 so groß sein, daß das Drehwerk schlagartig abgebremst wird, so daß aufgrund der auftretenden Belastungen der Drehwerksantrieb beschädigt oder aber die Last in einen instabilen Zustand geraten kann. Die Höhe des Bremsdruckes in der Arbeitsleitung 16 wird durch den Druck im Zylinder 42 bestimmten Einstellwert des Druckbegrenzungsventiles 4' vorgegeben. Bei der erfindungsgemäßen Schaltung wird über die Belastungsmeldeleitung 40 ein Steuerdruck an die Vorsteuerstufe 28 des Druckbegrenzungsventils gemeldet, der der Belastung des Baggers 8 entspricht. Das heißt, bei hoher Belastung des Baggers 8 wird das Druckbegrenzungsventil auf einen höheren Einstellwert eingestellt, als es bei einer niedrigen Belastung des Baggers 8 der Fall ist. Bei der in Figur 2 dargestellten Variante wird der Lastdruck des Hubzylinders 42 als Maß für das Massenträgheitsmoment des Drehwerks 10 über das Wechselventil 36 zur Vorsteuerstufe 28 gemeldet. Bei Überschreiten dieses Einstellwertes wird der Hauptkolben 22 des Druckbegrenzungsventils 4 aufgesteuert, so daß das Druckmittel von der Arbeitsleitung 16 über das Druckbegrenzungsventil 4' und die Verbindungsleitung 26 zum Anschluß S des Druckbegrenzungsventils 4 geführt wird. Dieses wird in Gegenrichtung durchströmt, so daß das Druckmittel von der Verbindungsleitung 26 in den Niederdruckbereich, das heißt die Arbeitsleitung 14 zurückgeführt wird. Für den Fall, daß der Druck in der Arbeitsleitung 14 auf eine Minimalniveau absinkt, kann über den Sauganschluß S Druckmittel aus dem Tank nachgesaugt werden.

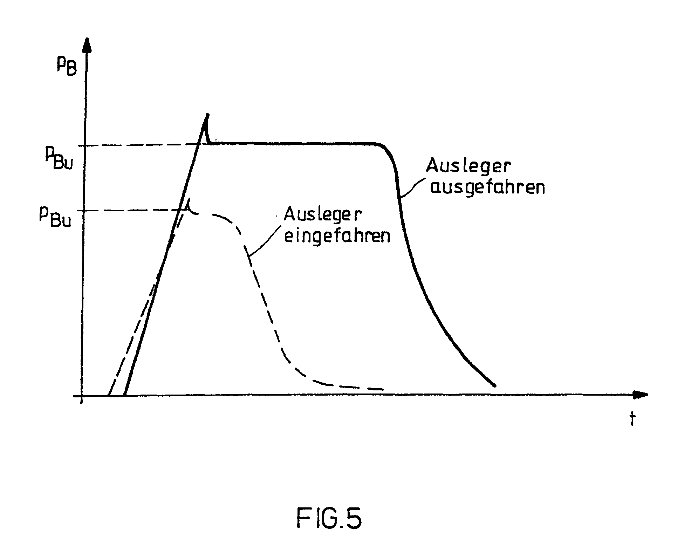

Durch das Melden eines der Belastung des Baggers 8 entsprechenden Vorsteuerlastdruckes an die Vorsteuerstufe der Druckbegrenzungsventile 4, 4' läßt sich deren Einstellwert auf einfache Weise anpassen, so daß die Betriebssicherheit des Baggers 8 beim Abbremsen des Drehwerks 10 jederzeit gewährleistet ist. In Figur 5 ist der Bremsdruck P_{B} über der Zeit bei verschiedenen Auslegerpostionen dargestellt. Die durchgezogene Linie steht für einen Betriebszustand, bei dem der Ausleger voll ausgefahren oder mit einer hohen Last beaufschlagt ist, während die gestrichelte Linie für einen eingefahrenen Ausleger oder eine geringe Last steht.

Demgemäß steigt beim Abbremsen des Drehwerks, das heißt beim Verstellen des Richtungsventils 12 in seine Sperrstellung, der Bremsdruck P_{B} zunächst bis zum Erreichen des Einstellwertes p_{Bu} an, so daß das Druckbegrenzungsventil in seine Regelposition gebracht wird, in der der Bremsdruck auf diesen Einstellwert p_{Bu} begrenzt wird. Bei geringem Massenträgheitsmoment, beispielsweise bei eingefahrenem Ausleger 44 liegt dieser Einstellwert P_{Bu} wesentlich unter dem entsprechenden Wert bei einem hohen Massenträgheitsmoment (Ausleger 44 ausgefahren), so daß das Drehwerk 10 im erstgenannten Fall vergleichsweise sanft mit geringem Bremsdruck abgebremst wird, während lediglich bei hoher Belastung der maximal anlegbare Bremsdruck wirkt. Dieser ist bei dem vorbeschriebenen Ausführungsbeispiel durch das nicht dargestellte Druckbegrenzungsventil in der Belastungsmeldeleitung 40 vorgegeben. Nach der Verzögerung des Drehwerkes mit dem dem Einstellwert PBu entsprechenden Bremsdruck sinkt der Druck in der Arbeitsleitung 16 auf ein unterhalb dieses Einstellwertes liegendes Niveau ab, so daß das Druckbegrenzungsventil 4' geschlossen bleibt und das Drehwerk bis zum Stillstand abgebremst wird.

In Figur 4 ist ein Ausführungsbeispiel eines Druckbegrenzungsventils 4 dargestellt, wie es bei einer Schaltung gemäß Figur 2 zum Einsatz kommen kann. Der Grundaufbau eines ähnlichen Ventils ist bereits in der Voranmeldung 197 44 337 der Anmelderin beschrieben, so daß hinsichtlich der konkreten Ausgestaltung des Ventils der Einfachheit halber auf diese Offenbarung verwiesen sei und im folgenden lediglich die zum Verständnis wesentlichen Bauelemente beschrieben werden.

Das Druckbegrenzungsventil 4 ist als Patrone aufgebaut und hat ein Ventilgehäuse 50, in dem eine Ventilbohrung 52 ausgeführt ist. Letztere bildet über eine Radialschulter einen Ventilsitz 54 aus, gegen den der Hauptkolben 22 über die Druckfeder 24 vorgespannt ist. Diese ist an einem in die Ventilbohrung 52 eingeschraubten Einsatzkörper 56 abgestützt, der seinerseits mit einer Vorsteuerventilbohrung 58 ausgeführt ist. Diese ist an ihrem in Figur 4 linken Endabschnitt zu einem Vorsteuerventilsitz 60 zurückgestuft, gegen den ein Vorsteuerventilkörper 62 über eine Vorsteuerfeder 64 vorgespannt ist. Diese ist an einem Federteller 66 abgestützt, der seinerseits an der Stirnfläche eines Übersetzerkolbens 68 anliegt. In den in Figur 4 rechten Endabschnitt der Vorsteuerventilbohrung 58 ist eine Stellschraube 70 eingeschraubt, in der eine Führungsbohrung 72 ausgebildet ist. Der Übersetzerkolben 68 durchsetzt diese Führungsbohrung 72, so daß die Axialposition des Federtellers 66 in Abhängigkeit von der Axialposition des Übersetzerkolbens 68 variierbar ist. Der andere Endabschnitt des Übersetzerkolbens 68 ist mit einem Anschlagbund 74 versehen, der in der in Figur 4 dargestellten Grundposition an einer Radialschulter der Führungsbohrung 72 anliegt, so daß die Bewegung des Übersetzerkolbens 68 nach links (Ansicht nach Figur 4) durch das Auflaufen des Anschlagbundes 74 auf die Radialschulter der Führungsbohrung 72 begrenzt ist.

Der Durchmesser des Übersetzerkolbens 68 ist etwas größer als der Durchmesser des Ventilsitzes 60 ausgeführt, so daß die Druckzuschaltstufe ein Übersetzungsverhältnis i > 1 aufweist. Beim gezeigten Ausführungsbeispiel wird das Übersetzungsverhältnis i der Druckzuschaltstufe mit 1,1 : 1 ausgeführt. Je nach Betriebsbedingungen können selbstverständlich auch andere Übersetzungsverhältnisse gewählt werden.

Die rechte Endposition des Übersetzerkolbens 68 ist durch eine in die Führungsbohrung 72 eingeschraubte Anschlagschraube 76 einstellbar, auf die der Anschlagbund 74 in seiner rechten Endposition (Ansicht nach Figur 4) aufläuft. In der in Figur 4 dargestellten Relativanordnung ist der Übersetzerkolben 68 zur Justierung blokkiert, so daß keine Axialbewegung möglich ist.

Die Einstellwerte des Druckbegrenzungsventiles 4 können durch Veränderung der Axialposition der Stellschraube 70 und der Anschlagschraube 76 verändert werden. Hierzu wird der Übersetzerkolben 68 zunächst blockiert, indem die Anschlagschraube 76 soweit eingedreht wird, bis der Anschlagbund 74 gegen die Radialschulter der Führungsbohrung 72 gedrückt wird. Diese Position ist in Figur 4 dargestellt.

Der Maximaldruck (oberer Einstellwert) des Druckbegrenzungsventils 4 wird eingestellt, indem die Stellschraube 70 soweit in die Vorsteuerventilbohrung 58 eingeschraubt wird, bis die Vorsteuerventilfeder 64 auf eine vorbestimmte Vorspannung eingestellt ist. Diese Vorspannung läßt sich über den Übersetzerkolben 68 nicht vergrößern, da dieser bereits in seine linke Anschlagposition gebracht ist.

Der minimale Druck (unterer Einstellwert) wird eingestellt, indem die Anschlagschraube 76 aus ihrer dargestellten Endposition herausgedreht wird, so daß die Vorspannung der Vorsteuerventilfeder 64 auf eine Minimum verringert wird, das sich dann einstellt, wenn der Druck am Vorsteueranschluß X gegen 0 geht. Durch entsprechendes Anlegen eines Vorsteuerdruckes an den Vorsteueranschluß X läßt sich dann die Vorspannung der Vorsteuerventilfeder 64 zwischen den beiden vorgenannten Grenzen variieren, und somit der Bremsdruck P_{B} in Abhängigkeit von der Belastung des Baggers 8 einstellen.

An dem in Figur 4 rechten Endabschnitt der Führungsbohrung 72 ist der Vorsteueranschluß X ausgebildet. Der Steueranschluß Y ist als Radialanschluß ausgebildet, der die Umfangswandungen des Ventilgehäuses 50 und des Einsatzkörpers 56 in Radialrichtung durchsetzt und in dem Federraum für die Vorsteuerventilfeder 64 mündet. Der Pumpenanschluß P ist an der linken Stirnseite des Ventilgehäuses 50 ausgebildet, während der Niederdruck- oder Tankanschluß T als Radialanschluß stromabwärts des Ventilsitzes 54 in der Ventilbohrung 52 mündet.

Der Hauptkolben 22 hat in seinem Boden eine Axialbohrung zur Aufnahme eines Düsenkörpers 78, über dessen Drosselbohrung Druckmittel vom Pumpenabschluß P in den Federraum des Hauptkolbens 22 eintreten kann.

In der dargestellten Grundposition liegt der Vorsteuerventilkörper 62 auf dem Vorsteuerventilsitz 60 auf, so daß der Hauptkolben 22 durch die Kraft der Druckfeder 24 und den über die Drosselbohrung 80 in den Federraum gemeldeten Druck gegen seinen Ventilsitz 54 vorgespannt ist. Beim Überschreiten eines vorbestimmten Drucks in diesem Federraum wird der Vorsteuerventilkörper 62 gegen die Kraft der Vorsteuerventilfeder 64 von seinem Vorsteuerventilsitz 60 abgehoben, so daß das Druckmittel vom Federraum des Hauptkolbens 22 in den Federraum der Vorsteuerventilfeder 64 und von dort über die Radialbohrungen zum Steueranschluß Y abströmen kann. Dadurch wird der auf den Hauptkolben 22 in Schließrichtung wirkende Druck abgebaut, so daß dieser von seinem Ventilsitz 54 abhebt und in seine Regelposition zur Begrenzung des Maximaldrucks am Pumpenanschluß P bewegt wird.

Die Einstellung dieses Maximaldruckes erfolgt somit in Abhängigkeit von derjenigen Kraft, die auf den Vorsteuerventilkörper 62 in Schließrichtung wirkt. Bei dem in Figur 4 dargestellten Ausführungsbeispiel können diese in Schließrichtung wirkenden Kräfte durch Veränderung der Vorspannung der vorsteuerventilfeder 64 variiert werden. Beim gezeigten Ausführungsbeispiel erfolgt dies, indem über den Vorsteueranschluß X der in der Belastungsmeldeleitung 40 herrschende Druck an die Rückseite (Stirnfläche des Anschlagbundes 74) des Übersetzerkolbens 68 gemeldet wird. Um dies zu ermöglichen, ist die Anschlagschraube 76 mit einer Axialbohrung versehen, durch die hindurch der Steuerdruck zur benachbarten Stirnfläche des Übersetzerkolbens 68 geführt ist.

Beim vorbeschriebenen Ausführungsbeispiel wirkt der Vorsteuerdruck mittelbar auf den Federteller 66 zur Veränderung der Vorspannung der Vorsteuerventilfeder 64. Alternativ zu dieser Variante könnte der Vorsteuerdruck auch direkt zur Rückseite des Vorsteuerventilkörpers 62 gemeldet werden, so daß dieser durch die Kraft der Vorsteuerventilfeder 64 und der aus dem Vorsteuerdruck resultierenden Druckkraft gegen den Vorsteuerventilsitz 60 gedrückt wird.

Die Anmelderin behält sich vor, auf den Aufbau des Druckbegrenzungsventils 4 mit dem Anlegen eines externen Vorsteuerdruckes X zur Beaufschlagung des Vorsteuerventilkörpers 62 eine eigene Anmeldung oder einen eigenen Anspruchssatz zu richten.

Offenbart ist eine Hydraulikschaltung zur Ansteuerung eines Verbrauchers eines mobilen Arbeitsgerätes, wobei der Druck in Zulauf- und Ablaufleitungen zum Verbraucher über vorgesteuerte Druckbegrenzungsventile begrenzt ist. Die Vorsteuerstufe dieser Druckbegrenzungsventile läßt sich in Abhängigkeit von einem Vorsteuerdruck einstellen, der der Belastung des Arbeitsgerätes entspricht.

## Patentansprüche

1. Hydraulische Schaltung zur Ansteuerung eines Verbrauchers (2) eines Arbeitsgerätes (8), mit einer Pumpe (1) zur Versorgung des Verbrauchers (2) mit Druckmittel über eine Zulaufleitung (14, 16), das über eine Rücklaufleitung (14, 16) zu einem Tank (T) zurückführbar ist, wobei in der Zulaufleitung und der Rücklaufleitung (14, 16) jeweils ein vorgesteuertes Druckbegrenzungsventil (4, 4') geschaltet ist, über das Druckmittel bei Überschreiten eines Grenzdruckes in einen Niederdruckbereich ableitbar ist, wobei eine Bremsdruckmeldeleitung (34), über die ein Vorsteuerventilkörper (62) des Druckbegrenzungsventils (4, 4') mittelbar oder unmittelbar mit einem der Belastung des Arbeitsgerätes (8) entsprechenden Vorsteuerlastdruck beaufschlagbar ist, **dadurch gekennzeichnet, daß** der Verbraucher ein Hydromotor (2) eines Drehwerks (10) ist und der Vorsteuerlastdruck an einem Hubzylinder (42) eines Auslegers (44) eines mobilen Arbeitsgerätes (8) abgegriffen ist.

2. Hydraulische Schaltung nach Patentanspruch 1, **dadurch gekennzeichnet, daß** die Bremsdruckmeldeleitung (34) vom Ausgang eines Wechselventils (36) abzweigt, an dessen Eingängen der Lastdruck des Verbrauchers (2) einerseits und der Vorsteuerlastdruck andererseits anliegen.

3. Hydraulische Schaltung nach einem der vorhergehenden Patentansprüche, **dadurch gekennzeichnet, daß** der Vorsteuerlastdruck auf einen Übersetzerkolben (68) wirkt, an dem eine Vorsteuerventilfeder (64) für den Vorsteuerventilkörper (62) abgestützt ist.

4. Hydraulische Schaltung nach einem der Patentansprüche 1 bis 3, **dadurch gekennzeichnet, daß** der Vorsteuerlastdruck den Vorsteuerventilkörper (62) direkt in Schließrichtung beaufschlagt.

5. Hydraulische Schaltung nach einem der vorhergehenden Patentansprüche, **dadurch gekennzeichnet, daß** jedes Druckbegrenzungsventil (4, 4') ein Drucknachsaugventil ist, über das Druckmittel bei Druckaufbau in der Rücklaufleitung (14, 16) in die Zulaufleitung (14, 16) nachsaugbar ist.

6. Hydraulische Schaltung nach einem der vorhergehenden Patentansprüche, **dadurch gekennzeichnet, daß** zwischen der Pumpe 1 und dem Druckbegrenzungsventil (4, 4') ein Wegeventil (12) mit einem Richtungsteil geschaltet ist, und daß der Vorsteuerlastdruck an die Vorsteuerstufen (28) beider Druckbegrenzungsventile (4, 4') gemeldet ist.

7. Hydraulische Schaltung nach Ansprunch 2 oder einem der vorhergehenden Patentansprüche 3 bis 6 in kombination mit Anspruch 2, **dadurch gekennzeichnet, daß** in der Belastungsmeldeleitung (40), die mit dem einen Eingangsanschluß des Wechselventils (36) und mit dem Zylinderraum des Hubzylinders (42) verbunden ist, ein Druckbegrenzungsventil zur Begrenzung des Vorsteuerlastdruckes geschaltet ist.

8. Hydraulische Schaltung, nach Anspruch 3, **dadurch gekennzeichnet, daß** der übersetzerkolben (68) einen größeren Durchmesser als der Vorsteuerventilsitz (60) hat.

9. Verfahren zur Ansteuerung eines Hydromotors (2) eines Arbeitsgerätes (8), in dessen Zulauf- und Ablaufleitung (16, 17) jeweils ein vorgesteuertes Druckbegrenzungsventil (4, 4') geschaltet ist, so daß bei Überschreiten eines Grenzdruckes in einer Leitung (16, 17) eine Verbindung zu einem Niederdruckbereich aufgesteuert wird, wobei eine Vorsteuerstufe (28) des Druckbegrenzungsventils (4, 4') in Abhängigkeit vom Massenträgheitsmoment des Arbeitsgerätes (8) angesteuert wird, **dadurch gekennzeichnet, daß** ein Drehwerk (10) von dem Hydromotor (2) betrieben wird und ein Vorsteuerlastdruck zur Beaufchlagung eines Vorsteuerventilkörpers (62) des Druckbegrenzungventils (4, 4') an einem Hubzylinder (42) eines Auslegers (44) eines mobilen Arbeitsgerätes (8) abgegriffen wird.

10. Verfahren nach Patentanspruch 9, **dadurch gekennzeichnet, daß** das Massenträgheitsmoment in Abhängigkeit von der Position eines Auslegers (44) des Arbeitsgerätes (8) bestimmt wird.

## Claims

1. Hydraulic circuit for controlling a consumer (2) of a work tool (8), including a pump (1) for supplying the consumer (2), via a supply line (14, 16), with pressure medium which may be returned to a reservoir (T) through a return line (14, 16), with a respective pilot-controlled pressure control valve (4, 4') being arranged in said supply and return lines (14, 16) so that it is possible to carry off the pressure medium when a limit pressure in a low-pressure region is exceeded, wherein a pilot control valve body (62) of said pressure control valve (4, 4') is capable of directly or indirectly receiving application of a pilot load pressure corresponding to the load of the work tool (8) through a braking pressure reporting line (34), **characterized in that** said consumer is a hydraulic motor (2) of a rotating mechanism (10), and that the pilot load pressure is tapped at a lifting cylinder (42) of a boom (44) of a mobile work tool (8).

2. Hydraulic circuit in accordance with claim 1, **characterized in that** said braking pressure reporting line (34) branches from the output of a shuttle valve (36), at the inputs of which the load pressure of the consumer (2) on the one hand and the pilot load pressure on the other hand are present.

3. Hydraulic circuit in accordance with any one of the preceding claims, **characterized in that** the pilot load pressure acts on a transformer piston (68) against which a pilot control valve spring (64) for said pilot control valve body (62) is supported.

4. Hydraulic circuit in accordance with any one of claims 1 to 3, **characterized in that** the pilot load pressure acts directly on said pilot control valve body (62) in the closing direction.

5. Hydraulic circuit in accordance with any one of the preceding claims, **characterized in that** each pressure control valve (4, 4') is an anti-cavitation valve through which the pressure medium may be replenished in said supply line (14, 16) in the case of a pressure build-up in said return line (14, 16).

6. Hydraulic circuit in accordance with any one of the preceding claims, **characterized in that** between said pump 1 and said pressure control valve (4, 4') a directional control valve (12) comprising a directional component is arranged, and that the pilot load pressure is reported to the pilot control stages (28) of both pressure control valves (4, 4').

7. Hydraulic circuit in accordance with claim 2 or any one of the preceding claims 3 to 6 in combination with claim 2, **characterized in that** a pressure control valve for limiting the pilot load pressure is arranged in said load reporting line (40) which is connected to the one input port of said shuttle valve (36) and with the cylinder chamber of said lifting cylinder (42).

8. Hydraulic circuit in accordance with claim 3, **characterized in that** said transformer piston (68) has a greater diameter than said pilot control valve seat (60).

9. A method for controlling a hydraulic motor (2) of a work tool (8) having a respective pilot-controlled pressure control valve (4, 4') arranged in the supply and outlet lines (16, 17) thereof, so that upon exceeding a limit pressure in a line (16, 17) a connection with a low-pressure region is controlled open, wherein a pilot control stage (28) of said pressure control valve (4, 4') is controlled in dependence on the mass moment of inertia of the work tool (8), **characterized in that** a rotating mechanism (10) is operated by said hydraulic motor (2), and a pilot load pressure for application to a pilot control valve body (62) of said pressure control valve (4, 4') is tapped at a lifting cylinder (42) of a boom (44) of a mobile work tool (8).

10. A method in accordance with claim 9, **characterized in that** the mass moment of inertia is determined in accordance with the position of a boom (44) of the work tool (8).

## Revendications

1. Circuit hydraulique pour la commande d'un consommateur (2) d'un engin de travail (8), avec une pompe (1) pour l'alimentation du consommateur (2) en fluide sous pression par une conduite aller (14, 16), fluide qui peut être renvoyé à un réservoir (T) par une conduite retour (14, 16), dans lequel dans la conduite aller et dans la conduite retour (14,16) est montée respectivement une valve de limitation de pression (4, 4')commandée par pilote, par laquelle le fluide sous pression, lors du dépassement d'une pression limite, peut être dévié dans une zone à basse pression, dans lequel une conduite d'ordre de la pression de freinage (34), par laquelle un corps de valve de pilotage (62) de la valve de limitation de pression (4, 4') peut être soumis indirectement ou directement à une pression de charge de pilotage correspondant à la charge de l'engin de travail (8), **caractérisé en ce que** le consommateur est un moteur hydraulique (2) d'une tourelle (10) et **en ce que** la pression de charge de pilotage est prélevée sur un vérin de levage (42) d'une flèche (44) d'un engin de travail mobile (8).

2. Circuit hydraulique selon la revendication 1, **caractérisé en ce que** la conduite d'ordre de la pression de freinage (34) bifurque de la sortie d'un sélecteur de circuit (36) aux entrées duquel agit la pression de charge du consommateur (2) d'un côté et la pression de charge de pilotage de l'autre côté.

3. Circuit hydraulique selon l'une quelconque des revendications précédentes, **caractérisé en ce que** la pression de charge de pilotage agit sur un piston de conversion (68), sur lequel s'appuie un ressort de valve de pilotage (64) pour le corps de valve de pilotage (62).

4. Circuit hydraulique selon l'une quelconque des revendications 1 à 3, **caractérisé en ce que** la pression de charge de pilotage sollicite directement le corps de valve de pilotage (62) dans le sens de la fermeture.

5. Circuit hydraulique selon l'une quelconque des revendications précédentes, **caractérisé en ce que** chaque valve de limitation de pression (4, 4') est une valve de réaspiration de pression, par laquelle le fluide sous pression peut être réaspiré dans la conduite aller (14, 16) lors d'une montée en pression dans la conduite retour (14, 16).

6. Circuit hydraulique selon l'une quelconque des revendications précédentes, **caractérisé en ce qu'**entre la pompe (1) et la valve de limitation de pression (4, 4') est monté un distributeur (12) avec une partie directionnelle et que la pression de charge de pilotage est transmise aux étages de pilotage (28) des deux valves de limitation de pression (4, 4').

7. Circuit hydraulique selon la revendication 2 ou l'une quelconque des revendications précédentes 3 à 6 en combinaison avec la revendication 2, **caractérisé en ce que** dans la conduite d'ordre de la charge (40), qui est reliée à l'un des raccords d'entrée du sélecteur de circuit (36) et au compartiment cylindrique du vérin de levage (42) est montée une valve de limitation de pression pour la limitation de la pression de charge de pilotage.

8. Circuit hydraulique selon la revendication 3, **caractérisé en ce que** le piston de conversion (68) a un diamètre plus grand que le siège de la valve de pilotage (60).

9. Procédé de commande d'un moteur hydraulique (2) d'un engin de travail (8), dans les conduites aller et retour (16, 17) duquel est montée respectivement une valve de limitation de pression (4, 4') pilotée, de telle sorte que, lors du dépassement d'une pression limite dans une conduite (16, 17), une communication à une zone à basse pression est commandée en ouverture, dans lequel un étage de pilotage (28) de la valve de limitation de pression (4, 4') est commandé en fonction du moment d'inertie de masse de l'engin de travail (8), **caractérisé en ce qu'**une tourelle (10) est actionnée par le moteur hydraulique (2) et **en ce qu'**une pression de charge de pilotage pour la sollicitation d'un corps de valve de pilotage (62) de la valve de limitation de pression (4, 4') est prélevée sur un vérin de levage (42) d'une flèche (44) d'un engin de travail mobile (8).

10. Procédé selon la revendication 9, **caractérisé en ce que** le moment d'inertie de masse est déterminé en fonction de la position d'une flèche (44) de l'engin de travail (8).
